# EUROPÄISCHE PATENTSCHRIFT

(11) **EP 3 291 488 B1**
(45) Veröffentlichungstag und Bekanntmachung des Hinweises auf die Patenterteilung: **20.11.2019**
(21) Anmeldenummer: 16186347.7
(22) Anmeldetag: 30.08.2016
(51) Int. Cl.: H04L 12/24

(54) **VERFAHREN ZUR KONFIGURATION EINES KOMMUNIKATIONSMODULS ZUMINDEST EINES RFID-LESEGERÄTS UND KOMMUNIKATIONSMODUL**
METHOD FOR CONFIGURING A COMMUNICATION MODULE OF AT LEAST ONE RFID READING DEVICE AND COMMUNICATION MODULE
PROCEDE DE CONFIGURATION D'UN MODULE DE COMMUNICATION D'AU MOINS UN APPAREIL DE LECTURE RFID ET MODULE DE COMMUNICATION

(43) Veröffentlichungstag der Anmeldung: 07.03.2018
(73) Patentinhaber: Siemens Aktiengesellschaft, 80333 München (DE)
(72) Erfinder: Meyer, Heinrich, 90530 Wendelstein (DE)

(56) Entgegenhaltungen:
- EP-A1- 2 560 347
- US-B2- 9 184 987

## Beschreibung

In EP 2 546 777 B1 ist ein Verfahren zur Adressierung zumindest eines drahtlos zugreifbaren Datenspeichers beschrieben, bei dem die Adressierung des Datenspeichers in einem funkbasierten Datenaustausch zwischen dem Datenspeicher und einem Schreib/Lesegerät mittels einer ersten Identifikationsnummer des Datenspeichers erfolgt. Dabei wird der ersten Identifikationsnummer des Datenspeichers durch das Schreib/Lesegerät eine zweite Identifikationsnummer zugeordnet. Zur Identifikation des Datenspeichers wird bei einem auf diesen Datenspeicher bezogenen Datenaustausch des Schreib/Lesegerätes mit einer industriellen Automatisierungskomponente jeweils die zweite Identifikationsnummer verwendet. Dadurch kann die Automatisierungskomponente verkürzte Identifikationsnummern verwenden. Dabei ist weiterhin eine eindeutige Adressierung zwischen der Automatisierungskomponente und dem drahtlos zugreifbaren Datenspeicher gegeben.

DE 103 00 927 A1 offenbart betrifft ein Netzwerk mit mehreren Teilnehmern, die über zumindest einen Kommunikationskanal zum Austausch von Daten miteinander verbunden sind. Ein Netzwerkstecker, mit welchem ein Teilnehmer an das Netzwerk angeschlossen ist, weist einen Speicher auf, in welchem die teilnehmerspezifischen Daten zur Parametrierung bzw. Konfigurierung des Teilnehmers abgespeichert sind. Bei einer Wiederinbetriebnahme des Teilnehmers oder nach Austausch durch ein Ersatzgerät werden die teilnehmerspezifischen Daten aus dem Speicher in den neu angeschlossenen Teilnehmer übertragen. Aus WO2002/052791 A2 ist ein Verfahren zur Konfiguration von Endgeräten und Netzwerkkomponente innerhalb eines Netzwerkes, wobei zum Austausch eines Gerätes bzw. einer Komponente kein Spezialist benötigt wird. Das Bedienpersonal tauscht lediglich das Endgerät bzw. Die Netzwerkkomponente aus und steckt einen Konfigurations-Adapter in die serielle Schnittstelle, wobei das neu eingesetzte Endgerät bzw. die Netzwerkkomponente automatisch mit der abgespeicherten Konfiguration versorgt und gestartet wird.

In US 9 184 987 B2 ist ein Verfahren zur Konfiguration eines Kommunikationsmoduls zumindest eines RFID-Lesegeräts entsprechend dem Oberbegriff von Anspruch 1 beschrieben.

Der vorliegenden Erfindung liegt die Aufgabe zugrunde, ein Verfahren zur Konfiguration eines Kommunikationsmoduls eines RFID-Lesegeräts anzugeben, das bei einem Gerätetausch einfach, schnell und zuverlässig handhabbar ist, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsmodul mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Konfiguration eines Kommunikationsmoduls zumindest eines RFID-Lesegeräts, das über das Kommunikationsmodul an ein Kommunikationsnetz angebunden ist, wird das zumindest eine RFID-Lesegerät über eine serielle Schnittstelle an das Kommunikationsmodul angeschlossen. In einer Konfigurationsspeichereinheit des Kommunikationsmoduls werden zumindest Kommunikationsnetzadressinformationen und Gerätetypinformationen umfassende Konfigurationsinformationen gespeichert. Vorzugsweise umfassen die Konfigurationsinformationen auch einen Gerätenamen des Kommunikationsmoduls. Die Kommunikationsnetzadressinformationen können beispielsweise eine statische IP-Adresse oder eine für DHCPv4 zu verwendende MAC-Adresse umfassen. Die in der Konfigurationsspeichereinheit des Kommunikationsmoduls gespeicherten Konfigurationsinformationen werden über die serielle Schnittstelle an das zumindest eine RFID-Lesegerät übermittelt und dort in einem vorgegebenen Konfigurationsspeicherbereich gespeichert. Vorteilhafterweise werden die Konfigurationsinformationen auch bei ihrer Aktualisierung über die serielle Schnittstelle an das RFID-Lesegerät übermittelt und dort im vorgegebenen Konfigurationsspeicherbereich gespeichert.

Erfindungsgemäß werden die in der Konfigurationsspeichereinheit oder im Konfigurationsspeicherbereich des RFID-Lesegeräts gespeicherten Konfigurationsinformationen bei einem Gerätestart des Kommunikationsmoduls zu seiner Konfiguration geladen, und zwar in Abhängigkeit von einer erfolgreichen Gültigkeitsprüfung. Außerdem werden die im vorgegebenen Konfigurationsspeicherbereich des RFID-Lesegeräts gespeicherten Konfigurationsinformationen bei einem Gerätestart eines anstelle des Kommunikationsmoduls verwendeten Ersatz-Kommunikationsmoduls nach einer erfolgreichen Gültigkeitsprüfung zur Konfiguration des Ersatz-Kommunikationsgeräts geladen werden. Bei einer solchen Geräteersetzung kann insbesondere eine für DHCPv4 zu verwendende MAC-Adresse des Kommunikationsmoduls auf das Ersatz-Kommunikationsmodul übertragen werden. Darüber hinaus wird bei der Gültigkeitsüberprüfung zumindest überprüft, ob das Kommunikationsmodul und das Ersatz-Kommunikationsmodul einen identischen oder kompatiblen Gerätetyp aufweisen. Vorteilhafterweise erfolgt bei inkompatiblen Gerätetypen keine Übernahme der Konfigurationsinformationen.

Erfindungsgemäß wird bei der Gültigkeitsprüfung zusätzlich überprüft, ob in einer Konfigurationsspeichereinheit des Ersatz-Kommunikationsmoduls bereits für eine Inbetriebnahme des Ersatz-Kommunikationsmoduls zu verwendende Konfigurationsinformationen gespeichert sind. Die im vorgegebenen Konfigurationsspeicherbereich des RFID-Lesegeräts gespeicherten Konfigurationsinformationen werden beim Gerätestart des Ersatz-Kommunikationsmoduls nur dann zu seiner Konfiguration geladen werden, wenn die Konfigurationsspeichereinheit des Ersatz-Kommunikationsmoduls keine für die Inbetriebnahme des Ersatz-Kommunikationsmoduls zu verwendenden Konfigurationsinformationen oder nur ältere Konfigurationsinformationen umfasst. Auf diese Weise kann sichergestellt werden, dass bei einem Gerätetausch nur Konfigurationsinformationen übernommen werden, die auch tatsächlich relevanter sind als ggf. im Ersatz-Kommunikationsmodul bereits vorliegende Konfigurationsinformationen.

Die in der Konfigurationsspeichereinheit des Ersatz-Kommunikationsmoduls gespeicherten Konfigurationsinformationen werden entsprechend einer weiteren Ausgestaltung beim Gerätestart des Ersatz-Kommunikationsmoduls über die serielle Schnittstelle des RFID-Lesegeräts übermittelt und im vorgegebenen Konfigurationsspeicherbereich des RFID-Lesegeräts zur Aktualisierung gespeichert, wenn die Konfigurationsspeichereinheit des Ersatz-Kommunikationsmoduls aktuellere Konfigurationsinformationen umfasst. Vorteilhafterweise werden die im vorgegebenen Konfigurationsspeicherbereich des RFID-Lesegeräts gespeicherten Konfigurationsinformationen beim Gerätestart des Ersatz-Kommunikationsmoduls erst nach ihrer Aktualisierung zur Konfiguration des Ersatz-Kommunikationsgeräts geladen werden. Dies ist insbesondere dann vorteilhaft, wenn das Kommunikationsmodul bzw. das Ersatz-Kommunikationsmodul derart konfiguriert ist, dass die Konfigurationsinformationen beim Gerätestart stets aus dem vorgegebenen Konfigurationsspeicherbereich des RFID-Lesegeräts zur Konfiguration des Kommunikationsmoduls bzw. des Ersatz-Kommunikationsmoduls geladen werden.

Darüber hinaus kann bei der Gültigkeitsprüfung zusätzlich überprüft werden, ob die zur Konfiguration des Ersatz-Kommunikationsmoduls zu ladenden Konfigurationsinformationen für den Gerätetyp des Ersatz-Kommunikationsmoduls als erforderlich vorgegebene Angaben umfassen. In diesem Fall wird ein Fehler signalisiert, wenn für den Gerätetyp des Ersatz-Kommunikationsmoduls weder in der Konfigurationsspeichereinheit des Ersatz-Kommunikationsmoduls noch im vorgegebenen Konfigurationsspeicherbereich des RFID-Lesegeräts vollständige und zulässige Konfigurationsinformationen vorliegen. Dies ermöglicht zumindest eine zuverlässige Signalisierung von Konfigurationsproblemen.

Vorteilhafterweise wird beim Gerätestart des Ersatz-Kommunikationsmoduls überprüft, ob an das Ersatz-Kommunikationsmodul mehrere RFID-Lesegeräte angeschlossen sind. Dabei wird das RFID-Lesegerät für ein Auslesen der dort gespeicherten Konfigurationsinformationen ausgewählt, dem die höchste Priorität zugeordnet ist oder in dem die aktuellsten Konfigurationsinformationen gespeichert sind. Auf diese Weise wird eine bestmögliche Versorgung des Ersatz-Kommunikationsmoduls mit Konfigurationsinformationen sichergestellt.

Entsprechend einer weiteren Ausgestaltung des erfindungsgemäßen Verfahrens wird vor einer planmäßigen Trennung des RFID-Lesegeräts vom Kommunikationsmodul eine Abmeldung des RFID-Lesegeräts vom Kommunikationsmodul durchgeführt. Bei einer Abmeldung des RFID-Lesegeräts vom Kommunikationsmodul wird abgefragt, ob die im vorgegebenen Konfigurationsspeicherbereich des RFID-Lesegeräts gespeicherten Konfigurationsinformationen weiterverwendet werden sollen. Die im vorgegebenen Konfigurationsspeicherbereich des RFID-Lesegeräts gespeicherten Konfigurationsinformationen werden gelöscht, wenn diese nicht weiterverwendet werden sollen. Auf diese Weise kann insbesondere bei einem Umzug eines RFID-Lesegeräts zu einem anderen Kommunikationsmodul eine unerwünschte Übertragung von Konfigurationsinformationen verhindert werden.

Das erfindungsgemäße Kommunikationsmodul für RFID-Lesegeräte ist zur Durchführung eines Verfahrens entsprechend vorangehenden Ausführungen vorgesehen und umfasst zumindest eine serielle Schnittstelle zum Anschluss eines RFID-Lesegeräts. Außerdem weist das Kommunikationsmodul eine Konfigurationsspeichereinheit zur Speicherung von zumindest Kommunikationsnetzadressinformationen und Gerätetypinformationen umfassenden Konfigurationsinformationen auf. Das Kommunikationsmodul ist dafür ausgestaltet und eingerichtet, insbesondere durch Konfiguration, die in der Konfigurationsspeichereinheit gespeicherten Konfigurationsinformationen über die serielle Schnittstelle an ein angeschlossenes RFID-Lesegerät zu übermitteln und dort in einem vorgegebenen Konfigurationsspeicherbereich zu speichern.

Erfindungsgemäß ist bei das Kommunikationsmodul ferner dafür ausgestaltet und eingerichtet, die in der Konfigurationsspeichereinheit oder im vorgegebenen Konfigurationsspeicherbereich eines angeschlossenen RFID-Lesegeräts gespeicherten Konfigurationsinformationen bei einem Gerätestart des Kommunikationsmoduls zu seiner Konfiguration in Abhängigkeit von einer erfolgreichen Gültigkeitsprüfung zu laden. Darüber hinaus ist das Kommunikationsmodul dafür ausgestaltet und eingerichtet ist, bei der Gültigkeitsüberprüfung zumindest zu überprüfen, ob ein ersetztes Kommunikationsmodul und ein Ersatz-Kommunikationsmodul einen identischen oder kompatiblen Gerätetyp aufweisen.

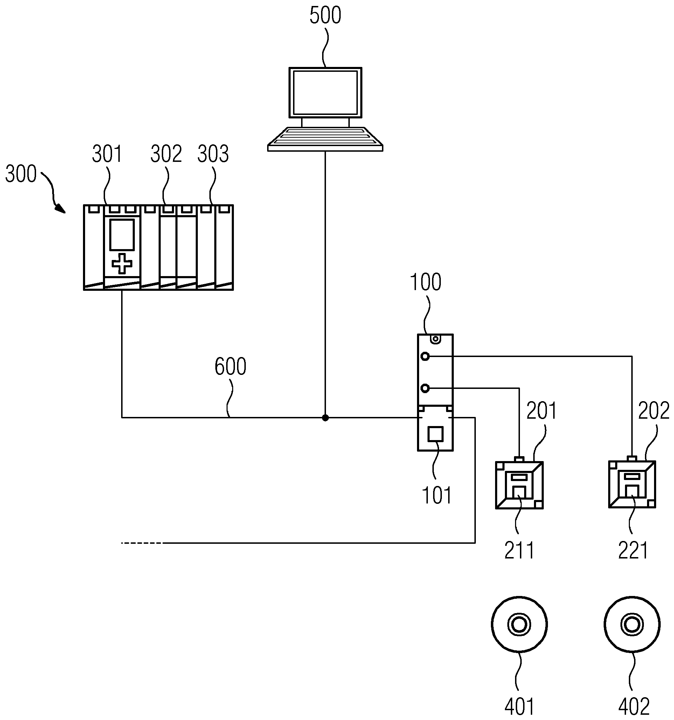

Die vorliegende Erfindung wird nachfolgend an einem Ausführungsbeispiel anhand der Zeichnung näher erläutert. Es zeigt die
- Figur: ein über einen Feldbus mit einer speicherprogrammierbaren Steuerung verbundenes Kommunikationsmodul, an das zwei RFID-Lesegeräte angeschlossen sind.

Das in der Figur dargestellte Kommunikationsmodul 100 ist über jeweils eine serielle Schnittstelle mit zwei RFID-Lesegeräten 201, 202 und über einen beispielsweise PROFINETbasierten Feldbus 600 mit einer speicherprogrammierbaren Steuerung 300 verbunden. Die beiden RFID-Lesegeräte 201, 202 sind zum Auslesen bzw. Beschreiben von RFID-Transpondern 401, 402 vorgesehen. An den Feldbus 600 ist außerdem eine Rechnereinheit 500 mit einer graphischen Benutzeroberfläche angebunden, über die beispielsweise Projektierungsfunktionen für die speicherprogrammierbare Steuerung 300 und Konfigurationsfunktionen für das Kommunikationsmodul 100 bereitgestellt werden. Hierzu kann auf der Rechnereinheit 500 beispielsweise ein Browser installiert sein, der auf jeweils einen auf dem Kommunikationsmodul 100 und auf der speicherprogrammierbaren Steuerung 300 eingerichteten Web-Server zugreift.

Die speicherprogrammierbare Steuerung 300 umfasst ein Kommunikationsmodul 301, eine Zentraleinheit 302 sowie zumindest eine Eingabe/Ausgabe-Einheit 303. Über das Kommunikationsmodul 301 ist die speicherprogrammierbare Steuerung 300 mit dem Feldbus 600 verbunden. Die Eingabe/Ausgabe-Einheit 303 dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung. Die Zentraleinheit 302 ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Das Kommunikationsmodul 100 weist neben einem Anschluss für den Feldbus 600 und den seriellen Schnittstellen für die RFID-Lesegeräte 201, 202 eine Konfigurationsspeichereinheit 101 zur Speicherung von zumindest Kommunikationsnetzadressinformationen und Gerätetypinformationen umfassenden Konfigurationsinformationen auf. Das Kommunikationsmodul 100 dafür konfiguriert, die in der Konfigurationsspeichereinheit 101 gespeicherten Konfigurationsinformationen über die jeweilige serielle Schnittstelle zumindest ein angeschlossenes RFID-Lesegerät 201, 202 zu übermitteln und dort in einem vorgegebenen Konfigurationsspeicherbereich 211, 221 zu speichern. Grundsätzlich können die Konfigurationsinformationen auch an beide RFID-Lesegeräte 201, 202 übermittelt werden.

Außerdem ist das Kommunikationsmodul 100 dafür ausgestaltet und eingerichtet, die in der Konfigurationsspeichereinheit 101 oder im vorgegebenen Konfigurationsspeicherbereich 211, 221 eines angeschlossenen RFID-Lesegeräts 201, 202 gespeicherten Konfigurationsinformationen bei einem Gerätestart des Kommunikationsmoduls 100 zu seiner Konfiguration in Abhängigkeit von einer erfolgreichen Gültigkeitsprüfung zu laden. Wird anstelle des Kommunikationsmoduls 100 ein Ersatz-Kommunikationsmodul verwendet, werden die im vorgegebenen Konfigurationsspeicherbereich 211, 221 des jeweiligen RFID-Lesegeräts gespeicherten Konfigurationsinformationen bei einem Gerätestart des Ersatz-Kommunikationsmodul nach einer erfolgreichen Gültigkeitsprüfung zur Konfiguration des Ersatz-Kommunikationsgeräts geladen. Dabei sind das Kommunikationsmodul 100 bzw. das Ersatz-Kommunikationsmodul dafür konfiguriert, bei der Gültigkeitsüberprüfung zumindest zu überprüfen, ob ein ersetztes Kommunikationsmodul und ein Ersatz-Kommunikationsmodul einen identischen oder kompatiblen Gerätetyp aufweisen. Die Konfigurationsinformationen werden auch bei ihrer Aktualisierung, die beispielsweise mittels der Rechnereinheit 500 durchgeführt wird, vom Kommunikationsmodul 100 bzw. Ersatz-Kommunikationsmodul über die jeweilige serielle Schnittstelle an ein angeschlossenes RFID-Lesegerät übermittelt und dort im vorgegebenen Konfigurationsspeicherbereich gespeichert.

Beim Gerätestart des Kommunikationsmoduls 100 bzw. des Ersatz-Kommunikationsmoduls wird vorteilhafterweise überprüft, ob an das Kommunikationsmodul 100 bzw. an das Ersatz-Kommunikationsmodul mehrere RFID-Lesegeräte angeschlossen sind. Dabei wird das RFID-Lesegerät für ein Auslesen der dort gespeicherten Konfigurationsinformationen ausgewählt, dem die höchste Priorität zugeordnet ist oder in dem die aktuellsten Konfigurationsinformationen gespeichert sind.

Im vorliegenden Ausführungsbeispiel ist das Kommunikationsmodul 100 ferner dafür ausgestaltet und eingerichtet, dass bei der Gültigkeitsprüfung zusätzlich überprüft wird, ob in der Konfigurationsspeichereinheit 101 bereits für eine Inbetriebnahme zu verwendende Konfigurationsinformationen gespeichert sind. Die im vorgegebenen Konfigurationsspeicherbereich 211, 221 eines angeschlossenen RFID-Lesegeräts 201, 202 gespeicherten Konfigurationsinformationen werden beim Gerätestart nur dann zur Konfiguration geladen, wenn die Konfigurationsspeichereinheit 101 keine für die Inbetriebnahme zu verwendenden Konfigurationsinformationen oder nur ältere Konfigurationsinformationen umfasst.

Darüber hinaus ist das Kommunikationsmodul 100 dafür konfiguriert, dass die in der Konfigurationsspeichereinheit 101 gespeicherten Konfigurationsinformationen beim Gerätestart über die serielle Schnittstelle eines angeschlossenen RFID-Lesegeräts 201, 202 übermittelt und im vorgegebenen Konfigurationsspeicherbereich 211, 221 des RFID-Lesegeräts 201, 202 zur Aktualisierung gespeichert werden, wenn die Konfigurationsspeichereinheit 101 aktuellere Konfigurationsinformationen umfasst. Das Kommunikationsmodul 100 lädt die im vorgegebenen Konfigurationsspeicherbereich 211, 221 eines angeschlossenen RFID-Lesegeräts 201, 202 gespeicherten Konfigurationsinformationen beim Gerätestart erst nach ihrer Aktualisierung zu seiner Konfiguration.

Des weiteren ist das dafür ausgestaltet und eingerichtet, dass bei der Gültigkeitsprüfung zusätzlich überprüft wird, ob die zur Konfiguration zu ladenden Konfigurationsinformationen für seinen Gerätetyp als erforderlich vorgegebene Angaben umfassen. Wenn für seinen Gerätetyp weder in der Konfigurationsspeichereinheit 101 noch im vorgegebenen Konfigurationsspeicherbereich 211, 221 eines angeschlossenen RFID-Lesegeräts 201, 202 vollständige und zulässige Konfigurationsinformationen vorliegen, signalisiert das Kommunikationsmodul 100 einen Fehler, vorzugsweise sowohl am Kommunikationsmodul 100 als auch an der Rechnereinheit 500.

Die Kommunikationsnetzadressinformationen können beispielsweise eine statische IP-Adresse oder eine für DHCPv4 zu verwendende MAC-Adresse umfassen. Im letzteren Fall wird die MAC-Adresse des Kommunikationsmoduls 100 bei einer Geräteersetzung auf das Ersatz-Kommunikationsmodul übertragen. Zusätzlich umfassen die Konfigurationsinformationen auch einen Gerätenamen des Kommunikationsmoduls 100. Somit kann das Kommunikationsmodul 100 nicht nur über seine IP-Adresse angesprochen werden, die je nach verwendetem Adresszuweisungsverfahren sich dynamisch ändern kann, sondern auch über seinen üblicherweise nicht veränderten Gerätenamen, der bei einer Geräteersetzung vorzugsweise auf das Ersatz-Kommunikationsmodul übertragen wird.

Vor einer planmäßigen Trennung eines RFID-Lesegeräts 201, 202 vom Kommunikationsmodul 100 wird eine Abmeldung des RFID-Lesegeräts 201, 202 vom Kommunikationsmodul 100 durchgeführt. Bei einer Abmeldung eines RFID-Lesegeräts 201, 202 vom Kommunikationsmodul 100 wird abgefragt, ob die im vorgegebenen Konfigurationsspeicherbereich 211, 221 eines RFID-Lesegeräts 201, 202 gespeicherten Konfigurationsinformationen weiterverwendet werden sollen. Die im vorgegebenen Konfigurationsspeicherbereich 211, 221 eines RFID-Lesegeräts 201, 202 gespeicherten Konfigurationsinformationen werden gelöscht, wenn diese nicht weiterverwendet werden sollen. Auf diese Weise kann eine irrtümliche Übertragung von Konfigurationsinformationen auf ein anderes Kommunikationsmodul verhindert werden, insbesondere wenn überhaupt kein Geräteersatz vorgesehen ist, sondern ein RFID-Lesegerät lediglich im Rahmen eines Umzugs an einem anderen Kommunikationsmodul verwendet wird.

## Patentansprüche

1. Verfahren zur Konfiguration eines Kommunikationsmoduls zumindest eines RFID-Lesegeräts, das über das Kommunikationsmodul an ein Kommunikationsnetz angebunden ist, bei dem
- das zumindest eine RFID-Lesegerät (201, 202) über eine serielle Schnittstelle an das Kommunikationsmodul (100) angeschlossen wird,
- zumindest Kommunikationsnetzadressinformationen und Gerätetypinformationen umfassende Konfigurationsinformationen in einer Konfigurationsspeichereinheit (101) des Kommunikationsmoduls (100) gespeichert werden,
- die in der Konfigurationsspeichereinheit (101) des Kommunikationsmoduls (100) gespeicherten Konfigurationsinformationen über die serielle Schnittstelle an das zumindest eine RFID-Lesegerät (201, 202) übermittelt und dort in einem vorgegebenen Konfigurationsspeicherbereich (211, 221) gespeichert werden,
- die im vorgegebenen Konfigurationsspeicherbereich (211, 221) des RFID-Lesegeräts (201, 202) gespeicherten Konfigurationsinformationen bei einem Gerätestart eines anstelle des Kommunikationsmoduls (100) verwendeten Ersatz-Kommunikationsmoduls zur Konfiguration des Ersatz-Kommunikationsmoduls geladen werden,
**dadurch gekennzeichnet, dass**
- die in der Konfigurationsspeichereinheit (101) oder im Konfigurationsspeicherbereich (211, 221) des RFID-Lesegeräts (201, 202) gespeicherten Konfigurationsinformationen bei einem Gerätestart des Kommunikationsmoduls (100) zu seiner Konfiguration in Abhängigkeit von einer erfolgreichen Gültigkeitsprüfung geladen werden,
- die im vorgegebenen Konfigurationsspeicherbereich (211, 221) des RFID-Lesegeräts (201, 202) gespeicherten Konfigurationsinformationen beim Gerätestart des Ersatz-Kommunikationsmoduls nach einer erfolgreichen Gültigkeitsprüfung zur Konfiguration des Ersatz-Kommunikationsmoduls geladen werden,
- bei der Gültigkeitsüberprüfung zumindest überprüft wird, ob das Kommunikationsmodul (100) und das Ersatz-Kommunikationsmodul einen identischen oder kompatiblen Gerätetyp aufweisen,
- bei der Gültigkeitsprüfung zusätzlich überprüft wird, ob in einer Konfigurationsspeichereinheit des Ersatz-Kommunikationsmoduls bereits für eine Inbetriebnahme des Ersatz-Kommunikationsmoduls zu verwendende Konfigurationsinformationen gespeichert sind,
- die im vorgegebenen Konfigurationsspeicherbereich (211, 221) des RFID-Lesegeräts (201, 202) gespeicherten Konfigurationsinformationen beim Gerätestart des Ersatz-Kommunikationsmoduls nur dann zu seiner Konfiguration geladen werden, wenn die Konfigurationsspeichereinheit des Ersatz-Kommunikationsmoduls keine für die Inbetriebnahme des Ersatz-Kommunikationsmoduls zu verwendenden Konfigurationsinformationen oder nur ältere Konfigurationsinformationen umfasst.

2. Verfahren nach Anspruch 1,
bei dem die in der Konfigurationsspeichereinheit des Ersatz-Kommunikationsmoduls gespeicherten Konfigurationsinformationen beim Gerätestart des Ersatz-Kommunikationsmoduls über die serielle Schnittstelle des RFID-Lesegeräts übermittelt und im vorgegebenen Konfigurationsspeicherbereich des RFID-Lesegeräts zur Aktualisierung gespeichert werden, wenn die Konfigurationsspeichereinheit des Ersatz-Kommunikationsmoduls aktuellere Konfigurationsinformationen umfasst.

3. Verfahren nach Anspruch 2,
bei dem die im vorgegebenen Konfigurationsspeicherbereich des RFID-Lesegeräts gespeicherten Konfigurationsinformationen beim Gerätestart des Ersatz-Kommunikationsmoduls erst nach ihrer Aktualisierung zur Konfiguration des Ersatz-Kommunikationsgeräts geladen werden.

4. Verfahren nach einem der Ansprüche 1 bis 3,
bei dem bei dem bei der Gültigkeitsprüfung zusätzlich überprüft wird, ob die zur Konfiguration des Ersatz-Kommunikationsmoduls zu ladenden Konfigurationsinformationen für den Gerätetyp des Ersatz-Kommunikationsmoduls als erforderlich vorgegebene Angaben umfassen, und bei dem ein Fehler signalisiert wird, wenn für den Gerätetyp des Ersatz-Kommunikationsmoduls weder in der Konfigurationsspeichereinheit des Ersatz-Kommunikationsmoduls noch im vorgegebenen Konfigurationsspeicherbereich des RFID-Lesegeräts vollständige und zulässige Konfigurationsinformationen vorliegen.

5. Verfahren nach einem der Ansprüche 1 bis 4,
bei dem beim Gerätestart des Ersatz-Kommunikationsmoduls überprüft wird, ob an das Ersatz-Kommunikationsmodul mehrere RFID-Lesegeräte angeschlossen sind, und bei dem das RFID-Lesegerät für ein Auslesen der dort gespeicherten Konfigurationsinformationen ausgewählt wird, dem die höchste Priorität zugeordnet ist oder in dem die aktuellsten Konfigurationsinformationen gespeichert sind.

6. Verfahren nach einem der Ansprüche 1 bis 5,
bei dem die Kommunikationsnetzadressinformationen eine statische IP-Adresse oder eine für DHCPv4 zu verwendende MAC-Adresse umfassen.

7. Verfahren nach Anspruch 6,
bei dem die MAC-Adresse des Kommunikationsmoduls bei einer Geräteersetzung auf das Ersatz-Kommunikationsmodul übertragen wird.

8. Verfahren nach einem der Ansprüche 1 bis 7,
bei dem die Konfigurationsinformationen umfassen einen Gerätenamen des Kommunikationsmoduls.

9. Verfahren nach einem der Ansprüche 1 bis 8,
bei dem die Konfigurationsinformationen bei ihrer Aktualisierung über die serielle Schnittstelle an das RFID-Lesegerät übermittelt und dort im vorgegebenen Konfigurationsspeicherbereich gespeichert werden.

10. Verfahren nach einem der Ansprüche 1 bis 9,
bei dem vor einer planmäßigen Trennung des RFID-Lesegeräts vom Kommunikationsmodul eine Abmeldung des RFID-Lesegeräts vom Kommunikationsmodul durchgeführt wird und bei dem bei einer Abmeldung des RFID-Lesegeräts vom Kommunikationsmodul abgefragt wird, ob die im vorgegebenen Konfigurationsspeicherbereich des RFID-Lesegeräts gespeicherten Konfigurationsinformationen weiterverwendet werden sollen, und bei dem die im vorgegebenen Konfigurationsspeicherbereich des RFID-Lesegeräts gespeicherten Konfigurationsinformationen gelöscht werden, wenn diese nicht weiterverwendet werden sollen.

11. Kommunikationsmodul für RFID-Lesegeräte zur Durchführung eines Verfahrens nach einem der Ansprüche 1 bis 10 mit
- zumindest einer seriellen Schnittstelle zum Anschluss eines RFID-Lesegeräts (201, 202),
- einer Konfigurationsspeichereinheit (101) zur Speicherung von zumindest Kommunikationsnetzadressinformationen und Gerätetypinformationen umfassenden Konfigurationsinformationen,
- wobei das Kommunikationsmodul (100) dafür ausgestaltet und eingerichtet ist, die in der Konfigurationsspeichereinheit (101) gespeicherten Konfigurationsinformationen über die serielle Schnittstelle an ein anschließbares RFID-Lesegerät (201, 202) zu übermitteln und dort in einem vorgegebenen Konfigurationsspeicherbereich (211, 221) zu speichern,
- wobei das Kommunikationsmodul (100) ferner dafür ausgestaltet und eingerichtet ist, die in der Konfigurationsspeichereinheit (101) oder im vorgegebenen Konfigurationsspeicherbereich (211, 221) eines anschließbaren RFID-Lesegeräts (201, 202) gespeicherten Konfigurationsinformationen bei einem Gerätestart des Kommunikationsmoduls (100) zu seiner Konfiguration in Abhängigkeit von einer erfolgreichen Gültigkeitsprüfung zu laden,
- wobei das Kommunikationsmodul (100) ferner dafür ausgestaltet und eingerichtet ist, bei der Gültigkeitsüberprüfung zumindest zu überprüfen, ob ein ersetztes Kommunikationsmodul und ein Ersatz-Kommunikationsmodul einen identischen oder kompatiblen Gerätetyp aufweisen,
- wobei das Kommunikationsmodul (100) ferner dafür ausgestaltet und eingerichtet ist, bei der Gültigkeitsprüfung zusätzlich zu überprüfen, ob in einer Konfigurationsspeichereinheit des Ersatz-Kommunikationsmoduls bereits für eine Inbetriebnahme des Ersatz-Kommunikationsmoduls zu verwendende Konfigurationsinformationen gespeichert sind,
- wobei das Kommunikationsmodul (100) ferner dafür ausgestaltet und eingerichtet ist, die im vorgegebenen Konfigurationsspeicherbereich (211, 221) des RFID-Lesegeräts (201, 202) gespeicherten Konfigurationsinformationen beim Gerätestart des Ersatz-Kommunikationsmoduls nur dann zu seiner Konfiguration zu laden, wenn die Konfigurationsspeichereinheit des Ersatz-Kommunikationsmoduls keine für die Inbetriebnahme des Ersatz-Kommunikationsmoduls zu verwendenden Konfigurationsinformationen oder nur ältere Konfigurationsinformationen umfasst.

12. Kommunikationsmodul nach Anspruch 11,
bei dem das Kommunikationsmodul ferner dafür ausgestaltet und eingerichtet ist, dass die in der Konfigurationsspeichereinheit gespeicherten Konfigurationsinformationen beim Gerätestart über die serielle Schnittstelle eines anschließbaren RFID-Lesegeräts übermittelt und im vorgegebenen Konfigurationsspeicherbereich des RFID-Lesegeräts zur Aktualisierung gespeichert werden, wenn die Konfigurationsspeichereinheit aktuellere Konfigurationsinformationen umfasst.

13. Kommunikationsmodul nach Anspruch 12,
bei dem das Kommunikationsmodul ferner dafür ausgestaltet und eingerichtet ist, dass die im vorgegebenen Konfigurationsspeicherbereich eines anschließbaren RFID-Lesegeräts gespeicherten Konfigurationsinformationen beim Gerätestart erst nach ihrer Aktualisierung zur Konfiguration geladen werden.

14. Kommunikationsmodul nach einem der Ansprüche 11 bis 13,
bei dem das Kommunikationsmodul ferner dafür ausgestaltet und eingerichtet ist, dass bei der Gültigkeitsprüfung zusätzlich überprüft wird, ob die zur Konfiguration zu ladenden Konfigurationsinformationen für seinen Gerätetyp als erforderlich vorgegebene Angaben umfassen, und dass ein Fehler signalisiert wird, wenn für seinen Gerätetyp weder in der Konfigurationsspeichereinheit noch im vorgegebenen Konfigurationsspeicherbereich eines angeschlossenen RFID-Lesegeräts vollständige und zulässige Konfigurationsinformationen vorliegen.

15. Kommunikationsmodul nach einem der Ansprüche 11 bis 13,
bei dem das Kommunikationsmodul ferner dafür ausgestaltet und eingerichtet ist, dass beim Gerätestart überprüft wird, ob mehrere RFID-Lesegeräte angeschlossen sind, und dass das RFID-Lesegerät für ein Auslesen der dort gespeicherten Konfigurationsinformationen ausgewählt wird, dem die höchste Priorität zugeordnet ist oder in dem die aktuellsten Konfigurationsinformationen gespeichert sind.

## Claims

1. Method for configuring a communication module of at least one RFID reader which is connected via the communication module to a communication network in which
- the at least one RFID reader (201, 202) is connected to the communication module (100) via a serial interface,
- configuration information comprising at least communication network address information and device type information is stored in a configuration storage unit (101) of the communication module (100),
- the configuration information stored in the configuration storage unit (101) of the communication module (100) is conveyed by the serial interface to the at least one RFID reader (201, 202) and stored there in a predetermined configuration storage area (211, 221),
- the configuration information stored in the predetermined configuration storage area (211, 221) of the RFID reader (201, 202) is loaded for configuration of the replacement communication module during a device start of a replacement communication module used instead of the communication module (100),
**characterized in that**
- the configuration information stored in the configuration storage unit (101) or in the configuration storage area (211, 221) of the RFID reader (201, 202) is loaded during a device start of the communication module (100) for its configuration in dependence on a successful validity check,
- the configuration information stored in the predetermined configuration storage area (211, 221) of the RFID reader (201, 202) is loaded for configuration of the replacement communication module after a successful validity check during the device start of the replacement communication module,
- during the validity check, it is checked at least whether the communication module (100) and the replacement communication module have an identical or compatible device type,
- during the validity check, it is additionally checked whether configuration information to be used for a commissioning of the replacement communication module is already stored in a configuration storage unit of the replacement communication module,
- the configuration information stored in the predetermined configuration storage area (211, 221) of the RFID reader (201, 202) is loaded during the device start of the replacement communication module for its configuration only when the configuration storage unit of the replacement communication module does not comprise any configuration information to be used for the commissioning of the replacement communication module or only comprises older configuration information.

2. Method according to Claim 1,
in which the configuration information stored in the configuration storage unit of the replacement communication module is conveyed via the serial interface of the RFID reader and stored in the predetermined configuration storage area of the RFID reader for updating during the device start of the replacement communication module if the configuration storage unit of the replacement communication module comprises more current configuration information.

3. Method according to Claim 2,
in which the configuration information stored in the predetermined configuration storage area of the RFID reader is only loaded after its updating for the configuration of the replacement communication device during the device start of the replacement communication module.

4. Method according to one of Claims 1 to 3,
in which it is additionally checked during the validity check whether the configuration information to be loaded for configuration of the replacement communication module comprises information specified as required for the device type of the replacement communication module and in which an error is signaled if complete and permissible configuration information is present neither in the configuration storage unit of the replacement communication model nor in the predetermined configuration storage area of the RFID reader for the device type of the replacement communication module.

5. Method according to one of Claims 1 to 4,
in which it is checked during the device start of the replacement communication module whether several RFID readers are connected to the replacement communication module and in which that RFID reader to which the highest priority is allocated or in which the most current configuration information is stored is selected for reading out the configuration information stored there.

6. Method according to one of Claims 1 to 5,
in which the communication network address information comprises a static IP address or a MAC address to be used for DHCPv4.

7. Method according to Claim 6,
in which the MAC address of the communication module is transmitted to the replacement communication module during a device replacement.

8. Method according to one of Claims 1 to 7,
in which the configuration information comprises a device name of the communication module.

9. Method according to one of Claims 1 to 8, in which the configuration information is conveyed during the updating thereof via the serial interface to the RFID reader and is stored there in the predetermined configuration storage area.

10. Method according to one of Claims 1 to 9,
in which before a scheduled separation of the RFID reader from the communication module, a deregistration of the RFID reader from the communication module is performed and in which in the case of a deregistration of the RFID reader from the communication module it is enquired whether the configuration information stored in the predetermined configuration storage area of the RFID reader is to be used further and in which the configuration information stored in the predetermined configuration storage area of the RFID reader is deleted if it is not to be used further.

11. Communication module of for RFID readers for performing a method according to one of Claims 1 to 10, comprising
- at least one serial interface for connecting an RFID reader (201, 202),
- a configuration storage unit (101) for storing configuration information comprising at least communication network address information and device type information,
- wherein the communication module (100) is designed and configured to convey the configuration information stored in the configuration storage unit (101) by the serial interface to a connectable RFID reader (201, 202) and to store it there in a predetermined configuration storage area (211, 221),
- wherein the communication module (100) is also designed and configured to load the configuration information stored in the configuration storage unit (101) or in the predetermined configuration storage area (211, 221) of a connectable RFID reader (201, 202), during a device start of the communication module (100), for its configuration in dependence on a successful validity check,
- wherein the communication module (100) is also designed and configured to check during the validity check at least whether a replaced communication module and a replacement communication module have an identical or compatible device type,
- wherein the communication module (100) is also designed and configured additionally to check during the validity check whether configuration information to be used for a commissioning of the replacement communication module is already stored in a configuration storage unit of the replacement communication module,
- wherein the communication module (100) is also designed and configured to load the configuration information stored in the predetermined configuration storage area (211, 221) of the RFID reader (201, 202), during the device start of the replacement communication module, for its configuration only when the configuration storage unit of the replacement communication module does not comprise any configuration information to be used for commissioning of the replacement communication module or only comprises older configuration information.

12. Communication module according to Claim 11,
in which the communication module is also designed and configured for the configuration information stored in the configuration storage unit to be conveyed via the serial interface of a connectable RFID reader and stored in the predetermined configuration storage area of the RFID reader for updating during the device start if the configuration storage unit comprises more current configuration information.

13. Communication module according to claim 12,
in which the communication module is also designed and configured for the configuration information stored in the predetermined configuration storage area of a connectable RFID reader to be loaded only after its updating for the configuration during the device start.

14. Communication module according to one of Claims 11 to 13,
in which the communication module is also designed and configured for it to be checked additionally during the validity check whether the configuration information to be loaded for configuration comprises information specified as required for its device type and for an error to be signaled if complete and permissible configuration information is present neither in the configuration storage unit nor in the predetermined configuration storage area of a connected RFID reader for its device type.

15. Communication module according to one of Claims 11 to 13,
in which the communication module is also designed and configured for it to be checked during the device start whether several RFID readers are connected and for that RFID reader to which the highest priority is allocated or in which the most current configuration information is stored to be selected for reading out the configuration information stored there.

## Revendications

1. Procédé de configuration d'un module de communication d'au moins un appareil de lecture RFID, qui est relié à un réseau de communication par le module de communication, dans lequel
- on raccorde le au moins un appareil (201, 202) de lecture RFID au module (100) de communication par une interface sérielle,
- on met des informations de configuration, comprenant des informations d'adresse dans le réseau de communication et des informations de type d'appareil, dans une unité (101) de mémoire de configuration du module (100) de communication,
- on transmet les informations de configuration, mises en mémoire dans l'unité (101) de mémoire de configuration du module (100) de communication, ou au moins un appareil (201, 202) de lecture RFID par l'interface sérielle et au moins un appareil (201, 202) de lecture RFID par l'interface sérielle et on les y mémorise dans une partie (211, 221) donnée à l'avance de mémoire de configuration,
- on charge les informations de configuration, mises en mémoire dans la partie (211, 221) donnée à l'avance de mémoire de configuration de l'appareil (201, 202) de lecture RFID, lors d'un démarrage d'appareils d'un module de communication de remplacement utilisé au lieu du module (100) de communication, pour la configuration du module de communication de remplacement,
**caractérisé en ce que**
- on charge les informations de configuration, mises en mémoire dans l'unité (101) de mémoire de configuration ou dans la partie (211, 221) de mémoire de configuration de l'appareil (201, 202) de lecture RFID, lors d'un démarrage d'appareils du module (100) de communication, pour sa configuration en fonction d'un contrôle de validité couronné de succès,
- on charge, pour la configuration du module de configuration de remplacement, après un contrôle de validité couronné de succès, les informations de configuration, mises en mémoire dans la partie (211, 221) de mémoire de configuration donnée à l'avance de l'appareil (201, 202) de lecture RFID, lors d'un démarrage d'appareils du module de communication de remplacement,
- on contrôle, lors du contrôle de validité, au moins si le module (100) de communication et le module de communication de remplacement ont un type d'appareil identique ou compatible,
- on contrôle, en outre, lors du contrôle de validité, si les informations de configuration à utiliser pour une mise en service du module de communication de remplacement sont déjà mémorisées dans une unité de mémoire de configuration du module de communication de remplacement,
- on ne charge, pour sa configuration, les informations de configuration, mises en mémoire dans la partie (211, 221) de mémoire de configuration donnée à l'avance et l'appareil (201, 202) de lecture RFID, lors du démarrage d'appareils du module de communication de remplacement, que si l'unité de mémoire de configuration du module de communication de remplacement ne comprend pas d'information de configuration à utiliser pour la mise en service du module de communication de remplacement ou ne contient que des informations de configuration assez anciennes.

2. Procédé suivant la revendication 1,
dans lequel on transmet les informations de configuration mises en mémoire dans l'unité de mémoire de configuration du module de communication de remplacement, lors du démarrage d'appareils du module de communication de remplacement, par l'interface sérielle de l'appareil de lecture RFID et on les mémorise pour mise à jour dans la partie de mémoire de configuration donnée à l'avance de l'appareil de lecture RFID, si l'unité de mémoire de configuration du module de communication de remplacement comprend des informations de configuration mises à jour.

3. Procédé suivant la revendication 2,
dans lequel on ne charge, pour la configuration de l'appareil de communication de remplacement, les informations de configuration mises en mémoire dans la partie de mémoire de configuration donnée à l'avance de l'appareil de lecture RFID, lors du démarrage d'appareils du module de communication de remplacement, seulement après leur mise à jour.

4. Procédé suivant l'une des revendications 1 à 3,
dans lequel on contrôle, en outre, lors du contrôle de validité, si les informations de configuration à charger pour la configuration du module de communication de remplacement comprennent, pour le type d'appareil du module de communication de remplacement, des indications prescrites comme nécessaires et dans lequel on signale une erreur, si, pour le type d'appareil du module de communication de remplacement, il n'y a des informations de configuration complètes et admissibles, ni dans l'unité de mémoire de configuration du module de communication de remplacement, ni dans la partie de mémoire de configuration donnée à l'avance de l'appareil de lecture RFID.

5. Procédé suivant l'une des revendications 1 à 4,
dans lequel on contrôle, au démarrage d'appareils du module de communication de remplacement, si plusieurs appareils de lecture RFID sont raccordés au module de communication de remplacement, et dans lequel on sélectionne l'appareil de lecture RFID pour une lecture des informations de configuration qui y sont mémorisées, auquel est affectée la priorité la plus grande et dan lequel les informations de configuration les plus mises à jour sont mises en mémoire.

6. Procédé suivant l'une des revendications 1 à 5,
dans lequel les informations d'adresses sur le réseau de communication comprennent une adresse IP statique ou une adresse MAC à utiliser pour DHCPv4

7. Procédé suivant la revendication 6,
dans lequel on transmet l'adresse MAC du module de communication lors d'un remplacement d'appareil, au module de communication de remplacement.

8. Procédé suivant l'une des revendications 1 à 7,
dans lequel les informations de configuration comprennent une dénomination d'appareil du module de communication.

9. Procédé suivant l'une des revendications 1 à 8,
dans lequel on transmet les informations de configuration, lors de leur mise à jour, par l'intermédiaire de l'interface sérielle, à l'appareil de lecture RFID et on les y met en mémoire dans la partie de mémoire de configuration donnée à l'avance.

10. Procédé suivant l'une des revendications 1 à 9,
dans lequel, avant de séparer, conformément à ce qui est prévu, l'appareil de lecture RFID du module de communication, on effectue une radiation de l'appareil de lecture RFID du module de communication, et dans lequel, lors d'une radiation de l'appareil de lecture RFID du module de communication, on demande si l'on doit continuer à utiliser les informations de configuration mises en mémoire dans la partie de mémoire de configuration donnée à l'avance de l'appareil de lecture RFID, et dans lequel on efface les informations de configuration mises en mémoire dans la partie de mémoire de configuration donnée à l'avance de l'appareil de lecture RFID, si celles-ci ne doivent pas continuer à être utilisées.

11. Module de communication pour des appareils de lecture RFID, afin d'effectuer un procédé suivant l'une des revendications 1 à 10, comprenant
- au moins une interface sérielle de raccordement d'un appareil (201, 202) de lecture RFID,
- une unité (101) de mémoire de configuration pour mettre en mémoire des informations de configuration, comprenant au moins des informations d'adresses dans un réseau de communication et des informations de type d'appareil,
- dans lequel le module (100) de communication est conformé et conçu pour transmettre les informations de configuration, mises en mémoire dans l'unité (101) de mémoire de configuration, par l'intermédiaire de l'interface sérielle, à un appareil (201, 202) de lecture RFID pouvant être raccordé, et pour les y mettre en mémoire dans une partie (211, 221) de mémoire de configuration donnée à l'avance,
- dans lequel le module (100) de communication est conformé et conçu, en outre, pour charger les informations de configuration, mises en mémoire dans une partie (211, 221) de mémoire de configuration donnée à l'avance d'un appareil (201, 202) de lecture RFID pouvant être raccordé, lors d'un démarrage d'appareils du module (100) de communication, pour sa configuration, en fonction d'un contrôle de validité couronné de succès,
- dans lequel le module (100) de communication est conformé et conçu, en outre, pour contrôler, lors du contrôle de validité, au moins si un module de communication remplacé et un module de communication de remplacement ont un type d'appareil identique ou compatible,
- dans lequel le module (100) de communication est conformé et conçu, en outre, pour contrôler, en outre, lors d'un contrôle de validité, si, dans une unité de mémoire de configuration du module de communication de remplacement, des informations de configuration à utiliser pour une mise en service du module de communication de remplacement sont déjà mises en mémoire,
- dans lequel le module (100) de communication est conformé et conçu, en outre, pour charger les informations de configuration mises en mémoire dans la partie (211, 221) de mémoire de configuration donnée à l'avance de l'appareil (201, 202) de lecture RFID, lors du démarrage d'appareils de module de communication de remplacement, pour sa configuration, seulement si l'unité de mémoire de configuration du module de communication de remplacement ne comprend pas d'information de configuration à utiliser pour la mise en service du module de communication de remplacement ou ne contient que des informations de configuration assez anciennes.

12. Module de communication suivant la revendication 1,
dans lequel le module de configuration est conformé et conçu, en outre, pour transmettre les informations de configuration mises en mémoire dans l'unité de mémoire de configuration, lors du démarrage d'appareils, par l'intermédiaire de l'interface sérielle d'un appareil de lecture RFID pouvant être raccordé, et pour les mettre en mémoire pour mise à jour dans la partie de mémoire de configuration donnée à l'avance de l'appareil de lecture RFID, si l'unité de mémoire de configuration comprend des informations de configuration assez mises à jour.

13. Module de communication suivant la revendication 12,
dans lequel le module de communication est conformé et conçu, en outre, de manière à charger, pour la configuration, les informations de configuration mises en mémoire dans la partie de mémoire de configuration donnée à l'avance d'un appareil de lecture RFID pouvant être raccordé, lors du démarrage d'appareils, seulement après leur mise à jour.

14. Module de communication suivant l'une des revendications 11 à 13,
dans lequel le module de communication est conformé et conçu, en outre, pour contrôler, en outre, lors du contrôle de validité, si les informations de configuration à charger pour la configuration comprennent des indications prescrites comme nécessaires pour son type d'appareil et pour signaler une erreur, si, pour son type d'appareil, il n'y a, ni dans l'unité de mémoire de configuration, ni dans la partie de mémoire de configuration donnée à l'avance d'un appareil de lecture RFID raccordé, des informations de configuration complètes et admissibles.

15. Module de communication suivant l'une des revendications 11 à 13,
dans lequel le module de communication est conformé et conçu, en outre, pour contrôler, au démarrage d'appareils, si plusieurs appareils de lecture RFID sont raccordés, et en ce que l'on choisit l'appareil de lecture RFID pour une lecture des informations de configuration qui y sont mémorisées, auquel est affectée la priorité la plus grande ou dans lequel les informations de configuration les plus récentes sont mises en mémoire.
